# FASCICULE DE BREVET EUROPEEN

(11) **EP 0 904 499 B1**
(45) Date de publication et mention de la délivrance du brevet: **29.03.2000**
(21) Numéro de dépôt: 97929359.4
(22) Date de dépôt: 13.06.1997
(51) Int. Cl.: F16F 1/387, F16F 1/38

(54) **ARTICULATION ELASTIQUE ET SON PROCEDE DE FABRICATION**
ELASTISCHES GELENK UND DESSEN HERSTELLUNGSVERFAHREN
RESILIENT HINGE AND METHOD FOR MAKING SAME

(30) Priorité: 13.06.1996 FR 9607343
(43) Date de publication de la demande: 31.03.1999
(73) Titulaire: MICHELIN AVS, 78000 Versailles (FR)
(72) Inventeur: GAUTHERON, Michel, F-58000 Nevers (FR); ISRAEL, Alain, F-58300 Saint Léger des Vignes (FR)
(74) Mandataire: Peuscet, Jacques
(86) Numéro de dépôt international: FR9701081
(87) Numéro de publication internationale: WO9747897

(56) Documents cités:
- EP-A- 0 524 843
- DE-A- 3 033 595
- FR-A- 1 224 834
- GB-A- 606 444
- GB-A- 660 560
- US-A- 2 958 526

## Description

L'invention concerne une articulation élastique du type comportant une douille interne rigide et une enveloppe extérieure rigide, sensiblement coaxiales, entre lesquelles est fixée une couche d'élastomère. Dans ce type d'articulation, la douille interne est généralement reliée à une pièce fixe et l'enveloppe externe à une pièce susceptible de vibrer et la couche d'élastomère permet d'amortir les vibrations en autorisant, en cours de fonctionnement, d'une part, un débattement axial entre la douille et l'enveloppe externe sous l'action de forces ayant une composante axiale, et, d'autre part, un désalignement des axes de la douille et de l'enveloppe sous l'action de forces ayant une composante radiale et enfin une rotation d'angle limité entre la douille et l'enveloppe.

Ces articulations élastiques s'appliquent, en particulier, à la fixation antivibratoire d'un élément, embarqué ou à poste fixe. Par exemple, pour la fixation d'un moteur sur le châssis d'un véhicule, la douille constitue une gaine pour un boulon de fixation sur le châssis et l'enveloppe extérieure est emmanchée sur un tube du berceau du moteur. On peut aussi utiliser ce type d'articulation pour relier un bras de suspension sur une chape fixée au châssis d'un véhicule.

FR-A-2 679 613 décrit une articulation élastique du type défini ci-dessus. Dans cette articulation, la douille interne cylindrique comporte deux collerettes annulaires en saillie sur sa paroi externe ; ces collerettes sont formées d'une seule pièce avec la douille et peuvent, par exemple, être usinées en même temps que la douille lorsque celle-ci est en métal. L'enveloppe extérieure est une bague disposée coaxialement autour de la douille, les dimensions respectives des collerettes de la douille et de l'enveloppe extérieure étant telles qu'un certain débattement soit possible entre les bords des collerettes et l'enveloppe extérieure. L'enveloppe extérieure est rabattue vers la douille de façon à former un rétreint annulaire, un jeu étant également ménagé entre le bord du rétreint et la surface de la douille de façon à permettre un certain débattement. Une couche élastomère est fixée entre la douille et l'enveloppe. Cette couche se compose de deux parties : une partie formée de deux portions situées entre une collerette de la douille et un rétreint de l'enveloppe et une partie située entre les deux collerettes. Les deux portions situées entre les collerettes et les rétreints ont essentiellement pour fonction d'amortir les vibrations ayant une composante axiale et la partie située entre les deux collerettes a essentiellement pour fonction d'amortir les vibrations ayant une composante radiale.

Selon ce brevet français, les deux parties de la couche élastomère peuvent être constituées de compositions élastomères identiques ou différentes ; cependant les deux parties sont reliées l'une à l'autre et sont toujours réalisées par moulage simultané. Dans ces conditions, les compositions élastomères utilisées ou bien sont identiques ou bien doivent être compatibles pour que l'on puisse effectuer un moulage par bi-injection. Le choix des compositions polymères utilisables est donc limité ; il est, par conséquent, difficile de modifier les caractéristiques d'amortissement axial par rapport aux caractéristiques d'amortissement radial autrement qu'en modifiant la forme de la partie comprise entre le rétreint et la collerette, et ces modifications sont limitées.

Par ailleurs, en raison de la présence des collerettes, il n'y a qu'un faible jeu entre l'enveloppe et le bord des collerettes, de sorte qu'il est difficile, voire impossible, d'obtenir, au moulage de la couche élastomère, des évidements axiaux suffisants répartis autour de l'axe car il n'y a pas assez de place pour glisser des inserts entre l'enveloppe et la douille. Il n'est donc pas possible de faire moduler, comme on le souhaiterait, la raideur élastique de la couche élastique dans une ou plusieurs directions radiales.

Enfin, compte-tenu de la présence des collerettes, le congé de raccordement entre la collerette et l'enveloppe extérieure pour la partie de la couche élastomère comprise entre les deux collerettes, est quasiment imposé vu la faible distance ; or, la forme d'un tel congé joue un rôle important sur la tenue à la fatigue de l'élastomère. Par ailleurs, il n'est pas possible de réduire la dimension des collerettes, car celles-ci sont destinées à servir de butée de fin de course pour le déplacement de l'enveloppe par rapport à la douille, lorsque le déplacement a une composante radiale.

La présente invention concerne une articulation élastique du type ci-dessus défini, qui permet de remédier aux inconvénients décrits ci-dessus.

L'invention a donc pour objet une articulation élastique comportant, en premier lieu, une douille interne et une enveloppe externe, rigides, disposées coaxialement, et, en second lieu, une couche d'élastomère fixée entre ladite douille et ladite enveloppe, la douille portant extérieurement deux collerettes annulaires et l'enveloppe étant conformée à chacune de ses extrémités, selon un rétreint, ladite couche d'élastomère étant constituée d'un manchon fixé dans la zone comprise entre les deux collerettes et de deux portions élastomères disposées entre chaque collerette et le rétreint, qui en est voisin, caractérisée par le fait que la douille est munie sur sa surface externe de deux épaulements et que les colleretttes annulaires sont constituées par deux rondelles rapportées en appui contre lesdits épaulements, la portion élastomère disposée entre chaque collerette et le rétreint voisin étant constituée par une bague rapportée en élastomère, chacune desdites bagues étant portée par l'une desdites rondelles en vis-à-vis d'un rétreint de l'enveloppe.

On voit que, selon l'invention, les bagues élastomères portées par chacune des rondelles et le manchon sont indépendants. Ils peuvent donc, sans problème particulier, être constitués de deux ou trois compositions élastomères différentes. Avantageusement, les bagues élastomères portées par les rondelles sont constituées par la même composition élastomérique et le manchon est constitué par une composition élastomérique différente. En particulier, la composition élastomérique constituant le manchon peut être moins rigide que celle constituant les bagues élastomères portées par les rondelles. Par exemple, on peut utiliser un mélange dureté 70 Shore pour fabriquer les bagues élastomères associées aux rondelles et un mélange dureté 50 Shore pour fabriquer le manchon.

On peut donc ainsi, en utilisant des compositions élastomériques différentes, moduler selon les applications de l'articulation élastique envisagée, les valeurs d'amortissement axial et d'amortissement radial.

La rondelle peut être métallique ou en matière plastique rigide.

La bague élastomère est, de préférence, rapportée et collée sur la rondelle ; mais il est aussi possible de déposer par stratification l'élastomère, par exemple sur une feuille de métal ou de matière plastique rigide, que l'on découpe ensuite. La bague d'élastomère fixée sur la rondelle peut avoir une forme annulaire d'épaisseur constante, mais elle peut avoir également une forme différente, par exemple avoir en section radiale la forme d'un quart de rond, la partie la plus épaisse étant disposée à la périphérie de la rondelle.

Par ailleurs, la bague élastomère portée par la rondelle peut être comprimée, en position de repos, par le rétreint de l'enveloppe, ou bien un jeu peut être ménagé entre ladite bague et le rétreint de l'enveloppe, d'un côté ou des deux côtés de l'articulation. Dans le premier cas, tout déplacement axial de l'enveloppe par rapport à la douille est soumis à un amortissement élastique. Dans le second cas, un déplacement axial libre peut se produire jusqu'à ce que la bague élastomère de l'une des rondelles vienne en contact avec le rétreint de l'enveloppe.

Le manchon en élastomère disposé entre la douille et l'enveloppe dans la zone comprise entre les épaulements, est moulé par injection de substance élastomère entre la douille et l'enveloppe avant la mise en place des rondelles.

De cette façon, lors du moulage, on peut définir, entre la douille et l'enveloppe, aux extrémités dudit manchon, un congé de raccordement de forme désirée selon la nature de la composition élastomérique utilisée, selon les dimensions relatives de l'articulation et selon l'application de l'articulation envisagée, de façon à réduire à un minimum la fatigue de la composition élastomérique constituant le manchon.

Par ailleurs, du fait que l'on effectue le moulage du manchon avant la mise en place des rondelles, il est possible d'introduire, entre la douille et l'enveloppe, lors du moulage, des inserts, de façon à ménager dans la bague des évidements allongés parallèles à l'axe. Ces évidements sont, de préférence, répartis de façon régulière autour de l'axe. La présence de ces évidements présente l'avantage décrit ci-après : si l'on appelle z l'axe de l'articulation commun à la douille et à l'enveloppe et x, y deux axes radiaux orthogonaux dans un plan perpendiculaire à z, on voit que les amortissements radiaux en x et en y peuvent être différents, grâce à la présence des évidements ; par exemple, si on ménage deux évidements à 180°, la rigidité de la bague pourra être plus faible selon l'axe y passant par les deux évidements que sur l'axe x, qui lui est perpendulaire. Une telle disposition est intéressante lorsque x correspond à l'axe longitudinal d'un véhicule et y à un axe transversal, car, dans un véhicule, les accélérations longitudinales sont beaucoup plus importantes que les accélérations transversales.

Selon l'invention, la douille peut comporter, à l'une de ses extrémités ou à ses deux extrémités, un évasement. Cet évasement peut être rendu nécessaire pour l'environnement de l'articulation lorsqu'elle est mise en place sur un véhicule.

L'articulation élastique selon l'invention peut être réalisée de la façon suivante :
- on prépare séparément une douille cylindrique munie de deux épaulements, une enveloppe constituée par un tube cylindrique de diamètre supérieur à celui de la douille et des rondelles sur un côté desquelles on rapporte une bague élastomère ;
- on moule un manchon en élastomère entre la douille et l'enveloppe, dans la zone comprise entre les deux épaulements ;
- on met en appui sur les épaulements de la douille les rondelles en disposant les bagues élastomères de façon que la substance élastomère soit tournée vers l'extérieur ; et
- on rabat les bords de l'enveloppe vers la douille de façon à former les rétreints.

Si la douille comporte au moins un évasement à l'une de ses extrémités, cet évasement sera fabriqué après la mise en place des rondelles. La mise en place des rondelles est avantageusement effectuée par emmanchement à force sur la douille.

La description donnée ci-dessous, à titre purement illustratif et non limitatif, de deux modes de réalisation de l'invention représentés sur le dessin annexé, permettra de mieux comprendre l'invention.

Sur ce dessin :
- la figure 1 représente, en perspective, avec arrachement partiel, un premier mode de réalisation de l'invention ;
- la figure 2 représente, en coupe axiale, le mode de réalisation de la figure 1 ;
- la figure 3 représente, en perspective, avec arrachement partiel, un second mode de réalisation de l'invention ;
- la figure 4 représente, en coupe axiale, le mode de réalisation de la figure 3 ;
- la figure 5 est une vue en coupe selon V-V de la figure 4.

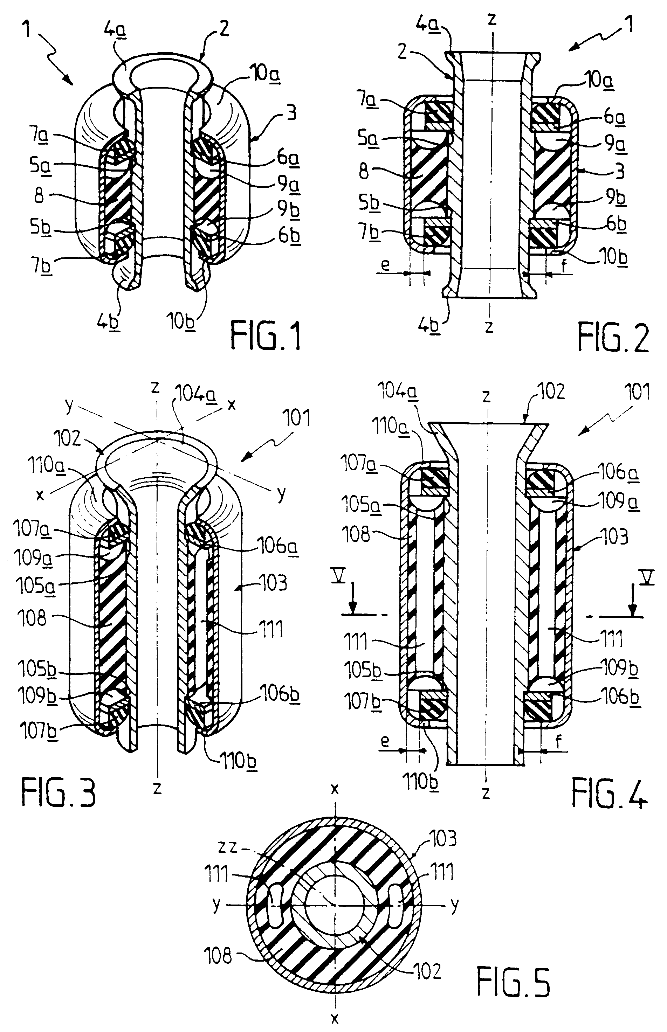

L'articulation élastique, telle que représentée sur les figures 1 et 2, est désignée dans son ensemble par la référence 1. Elle comporte une douille intérieure 2 et une enveloppe extérieure 3 rigides, par exemple métalliques, qui sont coaxiales, leur axe commun étant désigné par z-z. La douille 2, de forme générale cylindrique, s'élargit à chacune de ses extrémités selon un évasement 4a, 4b. La douille cylindrique 2 comporte dans sa partie centrale une zone de plus grande épaisseur, qui définit sur sa paroi extérieure deux épaulements symétriques 5a, 5b.

Sur les épaulements 5a, 5b, sont mises en place deux rondelles 6a, 6b portant chacune une bague élastomère 7a, 7b. Ces rondelles 6a, 6b sont disposées de façon que chacune des bagues 7a, 7b soit tournée vers l'extérieur, c'est-à-dire vers un des évasements 4a, 4b de la douille 2 ; elles sont emmanchées à force sur la douille 2.

Selon le mode de réalisation représenté sur les figures 1 et 2, les bagues 7a, 7b ont une section droite en forme de quart de rond, dont l'épaisseur maximale est située au droit de la périphérie des rondelles 6a, 6b. Cette forme de section droite a l'avantage de permettre une bonne progressivité.

Entre la douille 2 et l'enveloppe 3, est mis en place un manchon 8 en élastomère, qui s'étend d'une rondelle à l'autre ; le manchon 8 est obtenu par moulage par injection dans la zone comprise entre les deux épaulements 5a, 5b. A chacune des extrémités de ce manchon est ménagé un congé annulaire de raccordement 9a, 9b qui, dans le mode de réalisation représenté, a en section par un plan radial une forme semi-circulaire. Le manchon 8 est, de façon connue, solidarisé des parois entre lesquelles il est moulé, par exemple par collage.

L'enveloppe 3 comporte, à chacune de ses extrémités, un rétreint 10a, 10b. Entre le bord de chaque rondelle 6a, 6b et l'enveloppe 3, est ménagé un jeu radial e et, entre le bord des rétreints 10a, 10b de l'enveloppe 3 et la surface externe de la douille 2, est ménagé un jeu radial f légèrement supérieur au jeu e : ces jeux e et f permettent un débattement radial ou conique de l'enveloppe 3 par rapport à la douille 2.

Lorsque l'articulation élastique est en place, les bagues élastomères 7a, 7b permettent d'amortir les déplacements axiaux selon z-z de l'enveloppe 3 par rapport à la douille 2 ; en effet, pour de tels déplacements, le manchon 8 ne peut agir que par cisaillement et l'amortissement axial dû au manchon 8 est donc faible. Le déplacement axial de l'enveloppe 3 est limité du fait que le bord du rétreint 10a, 10b vient en butée contre l'évasement 4a, 4b de la douille 2. Le manchon 8 a pour fonction essentielle d'amortir les déplacements ayant une composante radiale. Dans le cas où une force ayant une composante radiale s'exerce sur l'enveloppe 3, ou bien ladite enveloppe se déplace perpendiculairement à l'axe z-z, jusqu'à ce qu'elle vienne en butée contre les rondelles 6a, 6b, le jeu e ménagé entre le rétreint 10a, 10b et la douille 2, autorisant ce déplacement, ou bien l'enveloppe 3 se déplace obliquement par rapport à l'axe z-z et s'incline par rapport audit axe z-z, jusqu'à ce que l'enveloppe 3 vienne en butée contre l'une ou l'autre des rondelles 6a, 6b.

Le mode de réalisation d'une articulation élastique représenté sur les figures 3 et 4, est analogue à celui représenté sur les figures 1 et 2. L'articulation élastique est désignée dans son ensemble par la référence 101 et les parties analogues à celles du premier mode de réalisation portent les références des figures 1 et 2 augmentées de 100.

La principale différence entre le mode de réalisation représenté sur les figures 3 et 4 et celui représenté sur les figures 1 et 2 est que, dans le manchon élastomère 108, sont ménagés deux évidements 111 allongés, parallèles, disposés à 180° l'un de l'autre, de façon à donner à la bague une plus faible rigidité dans un plan radial passant par les plans médians des deux évidements 111. Par ailleurs, sur le mode de réalisation des figures 3 et 4, la douille 102 ne comporte qu'un évasement 104a à l'une de ses extrémités.

Le fonctionnement de l'articulation élastique 101 est le même que celui de l'articulation élastique 1. Cependant, la présence des deux évidements allongés 111 permet d'avoir un amortissement plus élevé selon l'axe x-x que selon l'axe y-y (voir figure 5).

## Revendications

1. Articulation élastique (1, 101) comportant, en premier lieu, une douille (2, 102) interne et une enveloppe (3, 103) externe, rigides, disposées coaxialement, et, en second lieu, une couche d'élastomère fixée entre ladite douille (2, 102) et ladite enveloppe (3, 103), la douille (2, 102) portant extérieurement deux collerettes annulaires et l'enveloppe (3, 103) étant conformée à chacune de ses extrémités, selon un rétreint (10a, 10b ; 110a, 110b), ladite couche d'élastomère étant constituée d'un manchon (8, 108) fixé dans la zone comprise entre les deux collerettes et de deux portions élastomères disposées entre chaque collerette et le rétreint, qui en est voisin, caractérisée par le fait que la douille (2, 102) est munie sur sa surface externe de deux épaulements (5a, 5b ; 105a, 105b) et que les collerettes annulaires sont constituées par deux rondelles (6a, 6b ; 106a, 106b) rapportées en appui contre lesdits épaulements, la portion élastomère disposée entre chaque collerette et le rétreint voisin étant constituée par une bague (7a, 7b ; 107a, 107b) rapportée en élastomère, chacune desdites bagues (7a, 7b ; 107a, 107b) étant portée par l'une desdites rondelles (6a, 6b ; 106a, 106b) en vis-à-vis d'un rétreint (10a, 10b ; 110a, 110b) de l'enveloppe (3, 103).

2. Articulation selon la revendication 1, caractérisée par le fait que les bagues (7a, 7b ; 107a, 107b) portées par les rondelles (6a, 6b ; 106a, 106b) et le manchon (8, 108) sont constitués de deux ou trois compositions élastomériques différentes.

3. Articulation selon la revendication 2, caractérisée par le fait que les bagues (7a, 7b ; 107a, 107b) portées par les rondelles (6a, 6b ; 106a, 106b) sont constituées par la même composition élastomérique, alors que le manchon (8, 108) est constitué par une composition différente.

4. Articulation selon l'une des revendications 1 à 3, caractérisée par le fait que l'une au moins des bagues (7a, 7b ; 107a, 107b) portée par une rondelle (6a, 6b ; 106a, 106b) est comprimée par le rétreint (10a, 10b ; 110a, 110b) de l'enveloppe (3, 103), qui lui est adjacent.

5. Articulation selon l'une des revendications 1 à 4, caractérisée par le fait que le manchon (108) comporte des évidements (111) allongés parallèles à l'axe dudit manchon.

6. Articulation selon la revendication 5, caractérisée par le fait que les évidements (111) sont répartis de façon régulière autour de l'axe du manchon (108).

7. Articulation selon l'une des revendications 5 ou 6, caractérisée par le fait que le manchon (108) comporte deux évidements (111) symétriques par rapport à l'axe du manchon (108).

8. Articulation selon l'une des revendications 1 à 7, caractérisée par le fait que la douille (2, 102) comporte à l'une au moins de ses extrémités un évasement (4a, 4b ; 104a).

9. Procédé de fabrication d'une articulation élastique selon l'une des revendications 1 à 8, caractérisé par le fait que :
- on prépare séparément une douille (2, 102) cylindrique munie de deux épaulements (5a, 5b ; 105a, 105b), une enveloppe (3, 103) constituée par un tube cylindrique de diamètre supérieur à celui de la douille (2, 102) et des rondelles (6a, 6b ; 106a, 106b) sur un côté desquelles on rapporte une bague (7a, 7b ; 107a, 107b) élastomère ;
- on moule un manchon (8, 108) en élastomère entre la douille (2, 102) et l'enveloppe (3, 103), dans la zone comprise entre les deux épaulements (5a, 5b ; 105a, 105b);
- on met en appui sur les épaulements (5a, 5b ; 105a, 105b) de la douille (2, 102) les rondelles (6a, 6b ; 106a, 106b) en disposant les bagues élastomères (7a, 7b ; 107a, 107b) de façon que la substance élastomère soit tournée vers l'extérieur ; et
- on rabat les bords de l'enveloppe (3, 103) vers la douille (2, 102) de façon à former les rétreints (10a, 10b ; 110a, 110b).

10. Procédé selon la revendication 9, caractérisé par le fait qu'on forme un évasement (4a, 4b ; 104a) à au moins une extrémité de la douille (2, 102) après la mise en place des rondelles (6a, 6b ; 106a, 106b).

## Claims

1. Elastic articulation (1, 101) comprising, firstly, an internal bush (2, 102) and an external casing (3, 103), both rigid and arranged coaxially and, secondly, a layer of elastomer fixed between the said bush (2, 102) and the said casing (3, 103), the bush (2, 102) externally bearing two annular flanges, and the casing (3, 103) being shaped at each of its ends with a narrowing (10a, 10b; 110a, 110b), the said layer of elastomer consisting of a sleeve (8, 108) fixed in the region lying between the two flanges and two elastomer portions arranged between each flange and the narrowing, adjacent to it, characterized in that the bush (2, 102) on its external surface has two shoulders (5a, 5b; 105a, 105b) and that the annular flanges consist of two attached washers (6a, 6b; 106a, 106b) bearing against the said shoulders, the elastomer portion located between each flange and the adjacent narrowing consisting of an attached elastomer ring (7a, 7b; 107a, 107b), each of the said rings (7a, 7b; 107a, 107b) being borne by one of the said washers (6a, 6b; 106a, 106b) facing a narrowing (10a, 10b; 110a, 110b) of the casing (3, 103).

2. Articulation according to Claim 1, characterized in that the rings (7a, 7b; 107a, 107b) borne by the washers (6a, 6b; 106a, 106b) and the sleeve (8, 108) consist of two or three different elastomer compounds.

3. Articulation according to Claim 2, characterized in that the rings (7a, 7b; 107a, 107b) borne by the washers (6a, 6b; 106a, 106b) consist of the same elastomer compound while the sleeve (8, 108) consists of a different compound.

4. Articulation according to one of Claims 1 to 3, characterized in that at least one of the rings (7a, 7b; 107a, 107b) borne by a washer (6a, 6b; 106a, 106b) is compressed by the narrowing (10a, 10b; 110a, 110b) adjacent to it, belonging to the casing (3, 103).

5. Articulation according to one of Claims 1 to 4, characterized in that the sleeve (108) has elongate cavities (111) parallel to the axis of the said sleeve.

6. Articulation according to Claim 5, characterized in that the cavities (111) are distributed uniformly about the axis of the sleeve (108).

7. Articulation according to either of Claims 5 and 6, characterized in that the sleeve (108) has two cavities (111) which are symmetrical with respect to the axis of the sleeve (108).

8. Articulation according to one of Claims 1 to 7, characterized in that the bush (2, 102) at least at one of its ends has a flared portion (4a, 4b; 104a).

9. Method for manufacturing an elastic articulation according to one of Claims 1 to 8, characterized in that:
- a cylindrical bush (2, 102) with two shoulders (5a, 5b; 105a, 105b); a casing (3, 103) consisting of a cylindrical tube of larger diameter than the bush (2, 102); and washers (6a, 6b; 106a, 106b), to one side of which an elastomer ring (7a, 7b; 107a, 107b) is attached, are prepared separately;
- an elastomer sleeve (8, 108) is moulded between the bush (2, 102) and the casing (3, 103) in the region lying between the two shoulders (5a, 5b; 105a, 105b);
- the washers (6a, 6b; 106a, 106b) are made to rest on the shoulders (5a, 5b; 105a, 105b) of the bush (2, 102), placing the elastomer rings (7a, 7b; 107a, 107b) in such a way that the elastomer substance faces outwards; and
- the edges of the casing (3, 103) are turned over towards the bush (2, 102) so as to form the narrowings (10a, 10b; 110a, 110b).

10. Method according to Claim 9, characterized in that a flared portion (4a, 4b; 104a) is formed at least at one end of the bush (2, 102) after the washers (6a, 6b; 106a, 106b) have been fitted.

## Patentansprüche

1. Elastisches Gelenk (1, 101), mit erstens einer inneren steifen Hülse (2, 102) und einer äußeren steifen Ummantelung (3, 103) in einer koaxialen Anordnung, und zweitens einer zwischen der Hülse (2, 102) und der Ummantelung (3, 103) angebrachten Elastomerschicht, wobei die Hülse (2, 102) außen zwei ringförmige Kragen und die an ihren beiden Enden durch eine Einziehung (10a, 10b; 110a, 110b) angepaßte Ummantelung (3, 103) trägt und die Elastomerschicht von einer im Bereich zwischen den beiden Kragen angebrachten Muffe (8, 108) und von zwei Elastomerteilen gebildet ist, die zwischen jedem Kragen und der jeweils diesem benachbarten Einziehung angeordnet sind, durch gekennzeichnet, daß die Hülse (2, 102) auf ihrer Außenfläche zwei Absätze (5a, 5b; 105a, 105b) aufweist und daß die ringförmigen Kragen von zwei an den Absätzen anliegend aufgesteckten Unterlegscheiben (6a, 6b; 106a, 106b) gebildet sind, wobei das sich zwischen jedem Kragen und der benachbarten Einziehung angeordnete Elastomerteil von einem aus Elastomer bestehendem Ring (7a, 7b, 107a, 107b) gebildet ist und jeder dieser Ringe (7a, 7b; 107a, 107b) von einer der einer Einziehung (10a, 10b; 110a, 110b) der Ummantelung (3, 103) gegenüberliegenden Unterlegscheibe (6a, 6b; 106a, 106b) getragen wird.

2. Gelenk nach Anspruch 1, dadurch gekennzeichnet, daß die von den Unterlegscheiben (6a, 6b; 106a, 106b) getragenen Ringe (7a, 7b; 107a, 107b) und die Muffe (8, 108) aus zwei oder drei verschiedenen Elastomerkomponenten bestehen.

3. Gelenk nach Anspruch 2, dadurch gekennzeichnet, daß die von den Unterlegscheiben (6a, 6b; 106a, 106b) getragenen Ringe (7a, 7b; 107a, 107b) aus derselben Elastomerzusammensetzung besteen, während die Muffe (8, 108) aus einer anderen Zusammensetzung besteht.

4. Gelenk nach einem der Ansprüche 1 bis 3, dadurch gekennzeichnet, daß wenigstens einer der von einer Unterlegscheibe (6a, 6b; 106a, 106b) getragenen Ringe (7a, 7b; 107a, 107b) von der ihm benachbarten Einziehung (10a, 10b; 110a, 110b) der Ummantelung (3, 103) zusammengedrückt wird.

5. Gelenk nach einem der Ansprüche 1 bis 4, dadurch gekennzeichnet, daß die Muffe (108) parallel zu ihrer Achse verlaufende Aussparungen (111) aufweist.

6. Gelenk nach Anspruch 5, dadurch gekennzeichnet, daß die Aussparungen (111) gleichmäßig um die Achse der Muffe (108) verteilt sind.

7. Gelenk nach einem der Ansprüche 5 oder 6, dadurch gekennzeichnet, daß die Muffe (108) zwei in bezug auf die Achse der Muffe (108) symmetrische Aussparungen (111) aufweist.

8. Gelenk nach einem der Ansprüche 1 bis 7, dadurch gekennzeichnet, daß die Hülse (2, 102) an wenigstens einem ihrer Enden eine Erweiterung (4a, 4b; 104a) aufweist.

9. Verfahren zur Herstellung eines elastischen Gelenks nach einem der Ansprüche 1 bis 8, dadurch gekennzeichnet,
- daß man eine zylindrische, mit zwei Absätzen (5a, 5b; 105a, 105b) versehene Hülse (2, 102), eine von einem zylindrischen Rohr gebildete Ummantelung (3, 103) mit einem größeren Durchmesser als dem der Hülse (2, 102) und Unterlegscheiben (6a, 6b; 106a, 106b) mit einem auf einer ihrer Seiten angeordneten Elastomerring (7a, 7b; 107a, 107b) unabhängig voneinander herstellt;
- daß man in dem sich zwischen den beiden Absätzen (5a, 5b; 105a, 105b) befindenden Bereich zwischen der Hülse (2, 102) und der Ummantelung (3, 103) eine Elastomermuffe (8, 108) einformt;
- daß man die Unterlegscheiben (6a, 6b; 106a, 106b) an den Absätzen (5a, 5b; 105a, 105b) der Muffe (2, 102) anlegt, wobei die Elastomerringe (7a, 7b; 107a, 107b) so anordnet werden, daß das Elastomermaterial nach außen gekehrt ist und
- daß man die Ränder der Ummantelung (3, 103) zur Hülse (2, 102) hin umbördelt, um so die Einziehungen (10a, 10b; 110a, 110b) auszubilden.

10. Verfahren nach Anspruch 9, dadurch gekennzeichnet, daß man nach dem Anbringen der Unterlegscheiben (6a,6b; 106a, 106b) an wenigstens einem Ende der Hülse (2, 102) eine Erweiterung ausbildet (4a, 4b; 104a).
